# EUROPEAN PATENT APPLICATION

(11) **EP 2 916 279 A1**
(43) Date of publication of application: **09.09.2015**
(21) Application number: 14157787.4
(22) Date of filing: 05.03.2014
(51) Int. Cl.: G06Q 20/00

(54) **Transaction execution system, transaction execution method and computer program product**

(71) Applicant: NXP B.V., 5656 AG Eindhoven (NL)
(72) Inventor: Brands, Jan René, 5656 AG Eindhoven (NL); van Roermund, Timotheus Arthur, 5656 AG Eindhoven (NL); Polak, Piotr, 5656 AG Eindhoven (NL); Jedema, Friso Jacobus, 5656 AG Eindhoven (NL)
(74) Representative: Krott, Michel

(57) **Abstract**

There is disclosed a transaction execution system comprising a server, wherein: the server is arranged to receive, from a mobile device, a first barcode; the server is further arranged to provide, in response to receiving said first barcode, data for a second barcode to the mobile device; the server is further arranged to receive, from the mobile device, a second barcode corresponding to said data; the server is further arranged to validate the second barcode and to execute said transaction if it has positively validated the second barcode. Furthermore, a corresponding transaction execution method and a corresponding computer program product are disclosed.

## Description

### FIELD

The present disclosure relates to a transaction execution system. Furthermore, the present disclosure relates to a corresponding transaction execution method and to a corresponding computer program product.

### BACKGROUND

Today, security plays an important role in many electronic devices and computing environments. Present-day mobile devices, such as smart phones and tablets, support monetary transactions of different types. For example, such mobile devices may allow users to store and display barcodes that effectively substitute traditional paper-based tickets, vouchers, etc. These barcodes may be made available through so-called "apps", i.e. computer programs executable by mobile devices. For instance, in 2012 the company Apple Inc. launched an application called "Passbook". Passbook is an application designed to operate with the mobile operating system "iOS", which allows users to store coupons, boarding passes, event tickets, store cards, as well as more generic cards and mobile payment data of other formats.

The Passbook application is able to display passes as two-dimensional barcodes of the following types: *Aztec, PDF417* and *QR*. That is to say, each digital coupon or ticket is known as a "pass", and said pass comprises a barcode which can be displayed on a screen. Changes to a pass can be notified to a mobile device via the so-called "Apple Push Notification Service" by the pass provider. Furthermore, pass changes can be downloaded manually by a user. Compatible applications exist for other operating systems, such as "PassWallet" for the Android operating system, which support importing and viewing Passbook passes. The execution of the Passbook application can be triggered by a user's physical location and/or the current time of day. For example, the application may automatically show a message on the (lock) screen of a mobile device in order to notify the user of relevant passes or relevant pass changes at a specific location. A barcode may be scanned, i.e. read out, by a Point-of-Sale (POS) terminal or a similar device and may be sent to a server in order to execute a transaction. After a positive validation of the barcode, the transaction may be executed.

Recently, other companies have launched comparable applications. For example, Samsung announced a similar concept in the form of a new "Wallet app". Similar to Passbook, the Wallet app supports real-time notifications, for example, for a flight change. Furthermore, again similar to Passbook, the Wallet app is designed to store digital copies of the objects that would normally appear in a traditional wallet. Software developers may access a new software development kit (SDK) and application programming interface (API) set to store event tickets, hotel confirmations, membership data, loyalty cards, and more. The Wallet app may also store barcode data and push notifications when the mobile device on which it runs is at particular location and/or when a clock unit of the mobile device indicates a particular time of day.

In general, a barcode comprised in a Passbook pass represents a certain value to the user. In fact, this may also be a monetary value. When the barcode is scanned at a check-out during a purchase, there is no on-line connection to the device showing the barcode. The scanned barcode data are (presumably) checked for validity with the store's database (which may be stored on-line "in the cloud"), but a copy of a barcode cannot be distinguished from the original barcode. That is to say, a screenshot of a device showing a pass in the Passbook app cannot be distinguished from the real app running on the device.

Thus, the barcode or, more specifically, the number it represents is all that is used in such a POS system to debit a purchase against a certain customer account. Anyone who can get access to such a number can gain essentially complete control over the accompanying account and the amount of money stored in it. Compared to, for example, credit card transactions the security level of transactions based on barcodes of the kind set forth is very low. It is noted that the security level could in principle be increased by requiring interaction with the pass or device owner, for example by having the owner enter a personal identification number (PIN). However, this would detract from the user-friendliness and convenience of the system, because it requires an additional step for the payment and the owner would have to remember yet another PIN. In some barcode-based systems, attempts have been made to provide a reasonable level of security. However, none of these systems appears to provide a reasonable level of security while maintaining a relatively low level of complexity or an acceptable degree of user-friendliness.

For example, US 2012/240204 A1 describes systems and methods of authentication comprising a user, a service client, a service server, a portable communications device and an authentication server, wherein the method comprises use of one-time passwords and out-of-band outbound communication channels. US 2012/240204 A1 further describes the use of multi-dimensional barcodes and similar codes. The systems and methods described therein are relatively complex.

### SUMMARY

There is disclosed a transaction execution system comprising a server, wherein: the server is arranged to receive, from a mobile device, a first barcode; the server is further arranged to provide, in response to receiving said first barcode, data for a second barcode to the mobile device; the server is further arranged to receive, from the mobile device, a second barcode corresponding to said data; the server is further arranged to validate the second barcode and to execute said transaction if it has positively validated the second barcode.

According to an illustrative embodiment, the system further comprises a barcode reader which is arranged to read out a displayed barcode and to transmit a read out barcode to the server, and wherein the server is arranged to receive the first barcode and the second barcode through said barcode reader.

According to a further illustrative embodiment, the system further comprises a notification service, wherein said notification service is arranged to send a notification to the mobile device when the data for the second barcode is available.

According to a further illustrative embodiment, the server is arranged to keep a register in which a unique identifier of the mobile device is associated with the first barcode.

According to a further illustrative embodiment, the system further comprises a mobile device which is arranged to provide the first barcode and the second barcode to the server.

According to a further illustrative embodiment, the mobile device is further arranged to download the data for the second barcode from the server through a secure connection.

According to a further illustrative embodiment, the secure connection is a secure internet connection based on the Hypertext Transfer Protocol Secure, HTTPS.

According to a further illustrative embodiment, the mobile device is a mobile phone or a tablet.

Furthermore, there is disclosed a transaction execution method, wherein: a server receives, from a mobile device, a first barcode; the server provides, in response to receiving said first barcode, data for a second barcode to the mobile device; the server receives, from the mobile device, a second barcode corresponding to said data; the server validates the second barcode and executes said transaction if it has positively validated the second barcode.

Furthermore, there is disclosed a computer program product comprising program elements executable by a processing unit, said program elements comprising instructions which, when being executed by said processing unit, cause said processing unit to control or carry out steps of a method of the kind set forth.

### DESCRIPTION OF DRAWINGS

Embodiments will be described in more detail with reference to the appended drawings, in which:
Fig. 1 shows an illustrative embodiment of a transaction execution system;
Fig. 2 shows an illustrative embodiment of a transaction execution method.

### DESCRIPTION OF EMBODIMENTS

In a transaction execution system according to the present disclosure, a relatively simple and user-friendly security check is performed when a transaction is initiated or being carried out. More specifically, a first barcode displayed on the screen of a mobile device may be scanned and subsequently the scanned barcode may be sent to a back-end server. The back-end server may then push an update to the mobile device, i.e. data for a second barcode. The mobile device may then generate a second barcode based on said data. That is to say, the data for the second barcode may enable the generation of the second barcode. For example, in the below-described Passbook example, new barcode data comprised in new pass data may be used by the mobile device to generate a new barcode in a display format. The barcode on the screen of the mobile device may then be refreshed, i.e. the second barcode may be displayed on the screen of the mobile device. The second barcode may then be scanned and compared to the data for the second barcode pushed by the back-end server. If the second barcode is positively validated by the server, then the transaction may be executed. In this way, it may be possible to increase the level of security of barcode-based systems of the kind set forth in a relatively simple and user-friendly manner.

In the remainder of this document, the disclosed security check will be illustrated by way of an example based on the above-mentioned Passbook application. However, it should be emphasized that the disclosed security check may equally well be applied to other applications, such as the above-mentioned Wallet application. In other words, the present disclosure is not limited to a security check for said Passbook application.

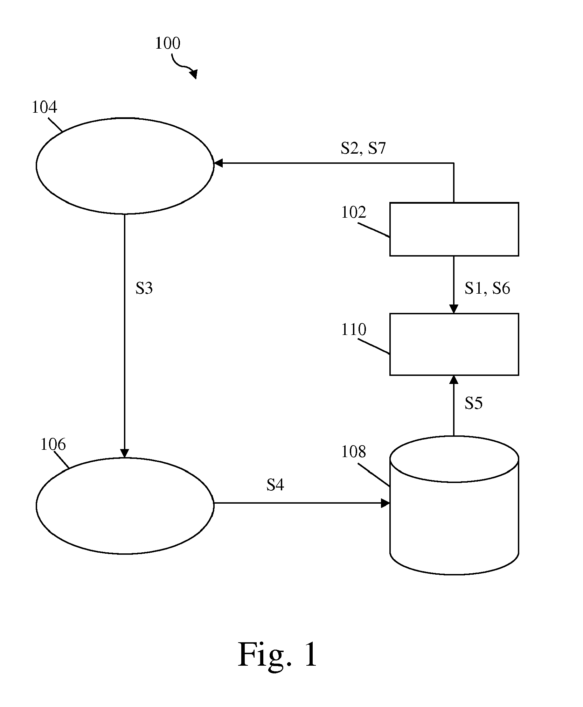

**Fig. 1** shows an illustrative embodiment of a transaction execution system. In this particular example, the transaction execution system 100 comprises a barcode reader 102, a web service 104, a push notification service 106, a pass storage unit 108, and a Passbook application 110. The barcode reader 102 may for example be comprised in a payment terminal (not shown). The Passbook application 110 and the pass storage unit 108 are both comprised in a mobile device (not shown), such as a smart phone or a web tablet. The web service 104 may be regarded as an example of a server of the kind set forth. The web service 104 may make use of a payment terminal that comprises the barcode reader 102 for capturing the barcode. Thus, the system may be compatible with existing infrastructures, in particular with existing barcode scanning equipment. Furthermore, the web service 104 may make use of the push notification service 106 in order to facilitate pushing new barcode data to the mobile device. The new barcode data may be comprised in new pass data which are pushed to the mobile device. The mobile device may store the new pass data, including the new barcode data, in the pass storage unit 108. Subsequently, the Passbook application 110 may fetch the new barcode data from the pass storage unit 108, generate a new barcode in display format and display it via a display unit (not shown) of the mobile device. In operation, the transaction execution system 100 may carry out a transaction execution method as set out below.

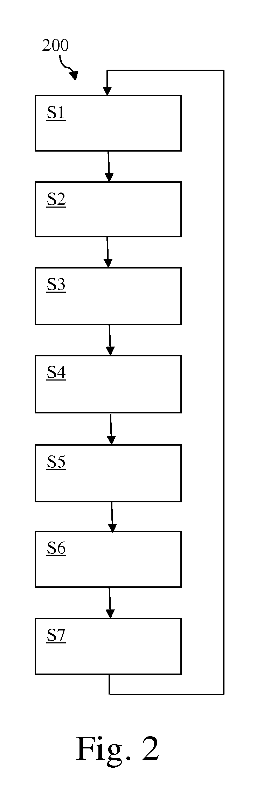

**Fig. 2** shows an illustrative embodiment of a transaction execution method. In this example, the transaction execution method 200 comprises the following steps. A barcode may be scanned S1 from the screen of a mobile device. Said barcode may be displayed in order to execute a transaction. Next, barcode data corresponding to the scanned barcode may be transmitted S2 to the web service 104. In response to receiving the barcode data, the web service 104 may push new pass data S3 to the push notification service 106. The optional push notification service 106 notifies S4 the mobile device that new pass data are available. Thereby, the user convenience may be increased. Subsequently, the push notification service 106 may transmit said new pass data to the mobile device, for example after a manual confirmation by the user of the mobile device. Alternatively, the mobile device may download, e.g. under control by the user, said new pass data from the web service 104 through a secure connection. Thereby, the security level may be further increased, because the interception and stealing of new pass data may be prevented. A particularly secure connection is an internet connection based on the Hypertext Transfer Protocol Secure, HTTPS. Next, in response to receiving the new pass data, the mobile device may store them in the pass storage unit 108. Subsequently, the Passbook application 110 may generate a new barcode based on the new barcode data included in the new pass data and display S5 the new barcode on the screen of the mobile device. Next, the new barcode may be scanned S6 from the screen of the mobile device and the corresponding new barcode data may be transmitted S7 to the web service 104 for comparison with a stored reference value, for example. Such a comparison may be regarded as an example of a validation of the second barcode performed by a server of the kind set forth. For example, if the new barcode data match the stored reference value, then the transaction may be executed. In case of a new transaction, the transaction execution method 200 may be carried out again, starting at the first step S 1. The skilled person will appreciate that other barcode validation methods may equally well be applied. For example, it is not strictly necessary that a barcode fully matches a stored reference value, but a partial match may also suffice.

According to an illustrative embodiment, the web service 104 may keep a register in which a unique identifier of the mobile device is associated with the original barcode, which is also unique. Thereby, the mobile device to which the corresponding new barcode data has to be provided may be identified more easily.

Typically, in a Passbook scenario, a single pass may be installed on multiple devices of the same user. However, in the present case each device may contain unique barcode data, so a different pass may be installed on each device. In order to distinguish between different passes of the same user, the passes may contain unique serial numbers. At the server side, the unique serial number of a particular pass may be associated with the original barcode comprised in said pass and with the unique identifier of the mobile device on which the particular pass is installed. Thereby, it is relatively easy to identify the mobile device to which the new pass data, including the new barcode, should be pushed.

In the given example, the registration process of a new device may be supported by a Passbook companion application. For instance, if a user wishes to install a pass on a new device, the user may install the companion application on his or her mobile device, and log in to his or her account to request a new pass for a new device. The companion application may subsequently download the pass data, for example. Furthermore, in order to register a new device with the server, it may be necessary to provide an authentication token to the server. The authentication token may be part of the data structure of the newly downloaded pass data.

It is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: transaction execution system
- 102: barcode reader
- 104: web service
- 106: push notification service
- 108: pass storage unit
- 110: Passbook application
- 200: transaction execution method
- S1: scan barcode
- S2: transmit barcode data
- S3: push new pass data
- S4: transmit new pass data
- S5: display new barcode
- S6: scan new barcode
- S7: new barcode data for comparison

## Claims

1. A transaction execution system comprising a server, wherein:
- the server is arranged to receive, from a mobile device, a first barcode;
- the server is further arranged to provide, in response to receiving said first barcode, data for a second barcode to the mobile device;
- the server is further arranged to receive, from the mobile device, a second barcode corresponding to said data;
- the server is further arranged to validate the second barcode and to execute said transaction if it has positively validated the second barcode.

2. A system as claimed in claim 1, further comprising a barcode reader which is arranged to read out a displayed barcode and to transmit a read out barcode to the server, and wherein the server is arranged to receive the first barcode and the second barcode through said barcode reader.

3. A system as claimed in claim 1 or 2, further comprising a notification service, wherein said notification service is arranged to send a notification to the mobile device when the data for the second barcode is available.

4. A system as claimed in any preceding claim, wherein the server is arranged to keep a register in which a unique identifier of the mobile device is associated with the first barcode.

5. A system as claimed in any preceding claim, further comprising a mobile device which is arranged to provide the first barcode and the second barcode to the server.

6. A system as claimed in claim 5, wherein the mobile device is further arranged to download the data for the second barcode from the server through a secure connection.

7. A system as claimed in claim 6, wherein the secure connection is a secure internet connection based on the Hypertext Transfer Protocol Secure, HTTPS.

8. A system as claimed in any of claims 5 to 7, wherein the mobile device is a mobile phone or a tablet.

9. A transaction execution method, wherein:
- a server receives, from a mobile device, a first barcode;
- the server provides, in response to receiving said first barcode, data for a second barcode to the mobile device;
- the server receives, from the mobile device, a second barcode corresponding to said data;
- the server validates the second barcode and executes said transaction if it has positively validated the second barcode.

10. A computer program product comprising program elements executable by a processing unit, said program elements comprising instructions which, when being executed by said processing unit, cause said processing unit to control or carry out steps of a method as claimed in claim 9.

## Amended claims

### Amended claims in accordance with Rule 137(2) EPC.

1. A transaction execution system comprising a server, wherein:
- the server is arranged to receive, from a mobile device, data corresponding to a first barcode;
- the server is further arranged to provide, in response to receiving said data corresponding to the first barcode, data for generating a second barcode to the mobile device;
- the server is further arranged to receive, from the mobile device, data corresponding to a second barcode generated by the mobile device;
- the server is further arranged to validate the data corresponding to the second barcode and to execute said transaction if it has positively validated the data corresponding to the second barcode.

2. A system as claimed in claim 1, further comprising a barcode reader which is arranged to read out a displayed barcode and to transmit data corresponding to a read out barcode to the server, and wherein the server is arranged to receive the data corresponding to the first barcode and the data corresponding to the second barcode through said barcode reader.

3. A system as claimed in claim 1 or 2, further comprising a notification service, wherein said notification service is arranged to send a notification to the mobile device when the data for generating the second barcode is available.

4. A system as claimed in any preceding claim, wherein the server is arranged to keep a register in which a unique identifier of the mobile device is associated with the first barcode.

5. A system as claimed in any preceding claim, further comprising a mobile device which is arranged to provide the data corresponding to the first barcode and data corresponding to the second barcode to the server.

6. A system as claimed in claim 5, wherein the mobile device is further arranged to download the data for generating the second barcode from the server through a secure connection.

7. A system as claimed in claim 6, wherein the secure connection is a secure internet connection based on the Hypertext Transfer Protocol Secure, HTTPS.

8. A system as claimed in any of claims 5 to 7, wherein the mobile device is a mobile phone or a tablet.

9. A transaction execution method, wherein:
- a server receives, from a mobile device, data corresponding to a first barcode;
- the server provides, in response to receiving said data corresponding to the first barcode, data for generating a second barcode to the mobile device;
- the server receives, from the mobile device, data corresponding to a second barcode generated by the mobile device;
- the server validates the data corresponding to the second barcode and executes said transaction if it has positively validated the data corresponding to the second barcode.

10. A computer program product comprising program elements executable by a processing unit, said program elements comprising instructions which, when being executed by said processing unit, cause said processing unit to control or carry out steps of a method as claimed in claim 9.
